(19) Europäisches Patentamt
European Patent Office
Office européen des brevets

(11) **EP 2 954 334 B1**

(12) **EUROPEAN PATENT SPECIFICATION**

(45) Date of publication and mention
of the grant of the patent:
**10.04.2019 Bulletin 2019/15**

(51) Int Cl.:
***G01P 5/02*** *(2006.01)*          ***G01P 13/02*** *(2006.01)*

(21) Application number: **14736437.6**

(22) Date of filing: **07.02.2014**

(86) International application number:
**PCT/IB2014/001082**

(87) International publication number:
**WO 2014/132138 (04.09.2014 Gazette 2014/36)**

(54) **METHOD AND SYSTEM FOR ESTIMATING AND PREDICTING AIRFLOW AROUND AIR VEHICLES**

VERFAHREN UND SYSTEM ZUR ABSCHÄTZUNG UND VORHERSAGE DES LUFTSTROMS UM LUFTFAHRZEUGE HERUM

PROCÉDÉ ET DISPOSITIF CONÇUS POUR ESTIMER ET PRÉDIRE L'ÉCOULEMENT DE L'AIR AUTOUR DES VÉHICULES AÉRIENS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.02.2013 US 201361762102 P**

(43) Date of publication of application:
**16.12.2015 Bulletin 2015/51**

(73) Proprietor: **King Abdullah University of Science and Technology**
**Thuwal 23955-6900 (SA)**

(72) Inventors:
• **CLAUDEL, Christian**
**Austin, TX 78750 (US)**
• **SALAMA, Khaled, N.**
**Thuwal 23955-6900 (SA)**
• **CALO, Victor**
**Thuwal 23955-6900 (SA)**
• **GHOMMEM, Mehdi**
**Thuwal 23955-6900 (SA)**
• **ESLSHURAFA, Amro**
**11672 Riyadh (SA)**
• **SHAQURA, Mohammad**
**Thuwal 23955-6900 (SA)**

(74) Representative: **Feray, Valérie et al**
**Ipsilon**
**Le Centralis**
**63, avenue du Général Leclerc**
**92340 Bourg-la-Reine (FR)**

(56) References cited:
**WO-A1-00/39537          WO-A2-2008/042412**
**DE-A1-102010 016 837    US-A- 5 117 687**
**US-A1- 2007 119 231     US-B1- 6 526 821**

**Description**

**CLAIM OF PRIORITY**

This application claims the benefit of prior U.S. Provisional Patent Application No. 61/762,102, filed on February 7, 2013.

**TECHNICAL FIELD**

The present invention is directed to systems and methods for measuring airflow around flying vehicle.

**BACKGROUND**

Flying vehicles can be used to perform environmental monitoring, surveillance, intelligence missions in confined and urban environments, and other functions. These systems are generally designed to fulfill some performance requirements such as high maneuverability and capability to overcome gust and operate in bad weather. They can be connected to sensing mechanisms. In particular, measuring the air speed and angle of attack is important for controlling flying vehicles. One such flying system that has become the focus of research is the unmanned air vehicles (UAV). Typical UAVs are much smaller than their manned counterparts as they do not require space and life support for a pilot. To monitor their airspeed and angle of attack, aircrafts currently rely on Pitot tubes and wind vanes, which are bulky, expensive and cannot be installed everywhere as they might perturb airflow, on wings for example. This is an important limitation for small aircraft. Particularly when employed on a UAV, the size of a Pitot tube can approach the size of airframe structures, impacting flight performance. Current sensors also require pressure lines (Pitot tubes) and drilling the aircraft structure (Pitot tubes and angle of attack sensors). As such, there is a need to develop and design miniaturized flow sensors that can be easily implemented on small vehicles and provide accurate measurements of the surrounding flow (without perturbing it) as required for controlling and maneuvering the flights.

Flow sensors have been used in many fields such as environmental monitoring, flight control, and medical instrumentation. A variety of miniaturized flow sensors capable of detecting both the flow rate and direction has been proposed and tested (Lee et al., 2009, Liu et al., 2012, Ma et al., 2006, Ma et al., 2008, Ma et al., 2009, Kim et al., 2004, Que et al., 2012, Fei et al., 2007). Que et al. (2012) presented hot-film flow sensor array, using a thermal metallic thin-film deposited on a flexible substrate that is mounted on the surface of the air vehicle. In absence of an incoming freestream (zero flow rate), the thermal element reaches a steady state temperature that corresponds to the equilibrium of the heat transfer process. As a flow travels around the air vehicle, the thermal element undergoes forced convective cooling. As a result, the temperature of the thermal element varies. This variation yields a change in the resistance of the element which is used to measure the flow speed that governs the cooling rate. Thermal flow sensors have not attracted considerable attention due to their significant power requirements and the difficulty to integrate them with other microscale systems (Kim et al., 2004).

Micro-cantilevers have been employed in force sensors (Yeh et al., 2008, Hsu et al., 2007), bio-sensors (Aboelkassem et al., 2010), chemical reactions detectors (Changizi et al., 2011), and inertial sensors (Ghommem et al., 2010, Ghommem et al., 2012, Nayfeh et al., 2013, Bhadbhade et al., 2008, Maenaka et al., 1996, Mohite et al., 2006, Acar and Shkel, 2004, Esmaeili et al., 2006). These sensors, however, do not sense flexural and torsional vibrations and do not measure fluid flow.

Air data sensors (airspeed and angle of attack sensors) used in UAVs are typically scaled-down counterparts of sensors used in commercial airplanes, namely Pitot tubes for airspeed measurements and wind vanes for angle of attack (SADS, 2012). While Pitot tube scale down easily (the downside being a higher risk of tube blockage and invalid readings), wind vane dimensions are only related to the required angle of attack and aircraft operating speed range, and not to the scale of the aircraft. As such, wind vanes become impractical for small aircrafts.

U.S. Patent No. 6,526,821 discloses an airfoil shaped flow angle probe that measures a force on an airfoil shaped member and converts the force to a strain at the base of the airfoil shaped member. At non-zero angles of attack, aerodynamic forces on the airfoil shaped member will produce both a bending stress and torque at the base of the probe.

PCT Publication No. WO 00/39537 discloses a fluid flow sensor having a piezoresistive material upon which the fluid flow applies a force causing changes in the resistance of the piezoresistive material, which can be used to measure fluid flow along a single bending direction.

PCT Publication No. WO 2008/042412 discloses an opt-mechanical anemometer that measures bending of an optical fiber using a beam of light projected from a free end of the optical fiber and impinging upon an optical detector.

U.S. Patent No. 5,117,687 discloses an omnidirectional aerodynamic sensor having a drag sphere coupled to an array of strain gauges to detect forces in three orthogonal directions.

U.S. Patent Application Publication No. 2007/119231 discloses a probe for measuring the incidence of an air stream using two strain gauges arranged symmetrically opposite of each other.

German patent document No. 10 2010 016837 discloses measuring fluid or gas flow using a fiber Bragg grating measuring system having at least two free-flow deflectable free arms, each of which includes an optical fiber producing light that is detected by a detector module.

Due to the aforementioned reasons, most UAVs are not equipped with angle of attack sensors. If they are, these sensors lead to a significant degradation in performance, and are not accurate enough for other purposes than stall detection. Thus, the use of UAVs is restricted to missions in which the distance to the ground or to obstacles is large, the weather is good (low turbulence), and the overall stall risk is low. This notably excludes the use of UAVs as low-altitude flood sensing platforms (during inclement weather), or as exploratory vehicles in damaged urban environments following earthquakes.

## SUMMARY

A method and system to measure airspeed and angle of attack at which the air travels across a flying vehicle is presented. The invention is directed to a method and system as defined in claims 1 and 8. The method and system can be cost-effective, small, light, and can have low power consumption by incorporating micro-cantilevers. For example, a cantilever beam can be attached at a specific location on the vehicle (e.g., wing). Being subjected to an incoming air stream, the beam undergoes flexural and torsional vibrations that are coupled via geometric nonlinearities and aerodynamic loading. Beam deflections can be measured to extract information about the surrounding flow. Calibration curves can be generated that show trend for variations of bending and torsion amplitudes with air speed and angle of attack. Different transduction principles can be used to generate readout signals based on beam deflections, such as capacitive, piezoelectric, piezoresistive, electrodynamic, and/or optical. Benefits of this sensor are numerous, for example, compactness, low drag, short measurement time constant, ease of integration with other systems, small size, and/or low weight.

In one aspect, the airflow sensing system is utilized to measuring flight data including airspeed, angle of attack, and/or sideslip. The system includes a cantilever having a surface, a transducer configured to detected deflections of the cantilever and produce an output based the deflections, and a processing module in communication with the cantilever. The cantilever can be positioned on a surface of a vehicle. The vehicle can be a flying vehicle, for example, an aircraft, an unmanned air vehicle, or any vehicle that can utilize the air flow sensing system. The vehicle can be a manned or unmanned aerial vehicle and/or can be a fixed-wing aircraft, a rotorcraft, and/or a jet aircraft. The processing module can be calibrated to translate the output from the transducer into the airspeed, the angle of attack, and/or the sideslip.

In some embodiments the cantilever can be designed to be supercritical beyond the Hopf bifurcation point for providing a stable response to a disturbance below a flutter boundary. The system response can be stable to any disturbance below the flutter boundary (Hopf bifurcation). Beyond this boundary, nonlinearities can yield limit cycle oscillations (LCOs) whose amplitude increases slowly with increasing flight speed. Geometric and material properties can be designed and/or selected such that the vibrating beam undergoes supercritical behavior. Geometric and material properties can be designed and/or selected such that the flutter speed (at which the beam starts to oscillate) is inside an operating range.

In some embodiments the system can further include at least one more cantilever and at least one more transducer configured to detected deflections of the at least one more cantilever and produce at least one more output to the processing module. The plurality of cantilevers can comprise a cantilever array. The cantilever array can be a two-dimensional array with each of the two dimensions less than twenty centimeters, less than ten centimeters, less than three centimeters, and/or less than one centimeter.

In some embodiments, the processing module can be configured to determine the airspeed and the angle of attack based on calibration data generated from bending amplitudes and/or torsion amplitudes of the cantilever. One or more of the bending amplitudes and the torsion amplitudes can correspond to a freestream velocity and/or the angle of attack. The processing module can be configured to measure deformation of the surface, to solve beam displacements and rotation, and/or to determine convergence with one or more criteria. The processing module can be configured to iteratively determine whether convergence with one or more criteria has been achieved.

In embodiments, the processing module can be configured to discretize the surface into a lattice of vortex rings, impose a no-penetration condition at collocation points, compute velocities, introduce vorticity to wakes, evaluate pressure at the collocation points, and integrate over the surface. In some embodiments, the cantilever can have three mutually orthogonal dimensions. The longest dimension of the cantilever can be less than ten centimeters, less than three centimeters, less than one centimeter, and/or less than one millimeter.

In another aspect, the method for air flow sensing includes measuring beam deflections of a cantilever, extracting information about air flow, and determining an airspeed, an angle of attack, and/or sideslip, based on extracted information. Determining airspeed and/or angle of attack can be based on calibration data generated from bending amplitudes or torsion amplitudes of the cantilever. One or more of the bending amplitudes and the torsion amplitudes can correspond to a freestream velocity and the angle of attack. The cantilever can comprise a surface.

Some embodiments can include measuring deformation of the surface utilizing an unsteady vortex lattice method, solving beam displacements and rotation, and determining convergence with one or more criteria. The unsteady vortex lattice method can include discretizing the surface into a lattice of vortex rings, imposing a no-penetration condition at collocation points, computing velocities, introducing vorticity to wakes, evaluating pressure at the collocation points, and/or integrating over the surface.

In some embodiments, determining airspeed and/or angle of attack can include solving potential flow based on an unsteady vortex lattice method. Determining airspeed and/or angle of attack can be based on a nonlinear displacement beam model.

Other aspects, embodiments, and features will be apparent from the following description, the drawings, and the claims.

**BRIEF DESCRIPTION OF THE DRAWINGS**

Figure 1 depicts an embodiment of the system installed on an aircraft.
Figure 2 depicts a cantilever beam.
Figure 3 depicts the limit cycle oscillations response of an aeroelastic system.
Figure 4 depicts a graph of beam displacement along y-axis.
Figure 5 depicts a flow chart of a numerical procedure.
Figure 6 depicts limit cycle oscillations associated with flexural and torsional deformations.
Figure 7 depicts a calibration curve of beam vibration amplitude versus airspeed.
Figure 8 depicts a power spectrum of the deflection of limit cycle oscillations for various angles of attack.
Figure 9 depicts a plot of variations of static deflection amplitudes at a beam tip. Figure 10 depicts a qualitative schematic of the Tractor configuration of the aircraft and shows the airflow sensors.
Figure 11 depicts a qualitative schematic of the Pusher configuration of the aircraft and shows the airflow sensors.

**DETAILED DESCRIPTION**

Exemplary embodiments described, shown, and/or disclosed herein are not intended to limit the claims, but rather, are intended to instruct one of ordinary skill in the art as to various aspects of the invention.

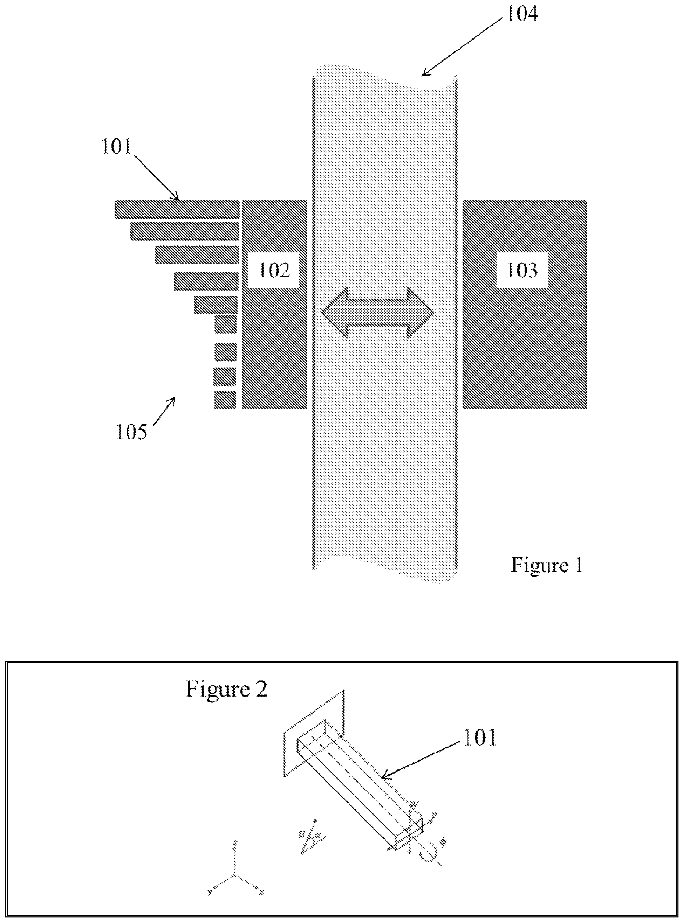

An exemplary embodiment is shown schematically in Figure 1. A micro- cantilever (101) is connected to a transducer (102). Cantilevers of differing lengths (105) are arranged in a two-dimensional array on the transducer. The array can measure shearing force. The cantilever and transducer comprise a sensor that is conformal to the surface of a vehicle. The vehicle can be a flying vehicle, or other vehicle that can utilize an airflow or fluid-flow sensing system. The vehicle can be a manned or unmanned aerial

vehicle and/or can be a fixed-wing aircraft, a rotorcraft, and/or a jet aircraft. The aircraft skin (104) can be nonconductive and allow wireless communication between the transducer and the processing module (103), represented by a double-sided arrow. For example, the aircraft skin or vehicle body can be carbon-based, such as carbon fiber, or it can be plastic or a polymer. Although the preferred embodiment includes a nonconductive membrane, the sensing system can be configured appropriately for use on conducting surfaces such as metal.

Another exemplary embodiment is shown schematically in Figure 2. In this embodiment the flow sensor can be based on a vibrating beam having three mutually orthogonal dimensions, $x, y,$ and $z$. The beam degrees of freedom comprise two flexural (or bending) components, $w(s, t)$ and $v(s, t)$, along the $z$ and $y$ directions, respectively, and torsional component, $\varphi(s; t)$.

The embodiments have several key advantages. The sensor can be much more compact than traditional airspeed sensors (e.g. Pitot tubes) and angle of attack sensors (e.g. wind vanes). Sensing the angle of attack on very small airplanes is impractical, as the wind vanes dimensions are comparable to the dimensions of the airplane, which causes additional drag or weight imbalance. The Pitot tubes can also cause induce significant drag. The embodiments described herein can exhibit shorter measurement time constants (for the angle of attack detection) since the inertia of the cantilevers is smaller than the inertia of a wind vane. The embodiments can be easily integrated with microscale and/or macroscale systems. For example, the sensor could be adhered to the surface of an airplane, as opposed to traditional angle of attack sensors that require the drilling of the airframe, potentially weakening it. Small size and low weight of the sensor system is advantageous for most UAVs as their size is generally on the order of few meters (if not centimeters or tens of centimeters) and their weight is often a few kilograms. Further, UAVs are often expected to operate in confined spaces and navigate at low altitude over complex terrain, situations where traditional sensor systems hinder performance.

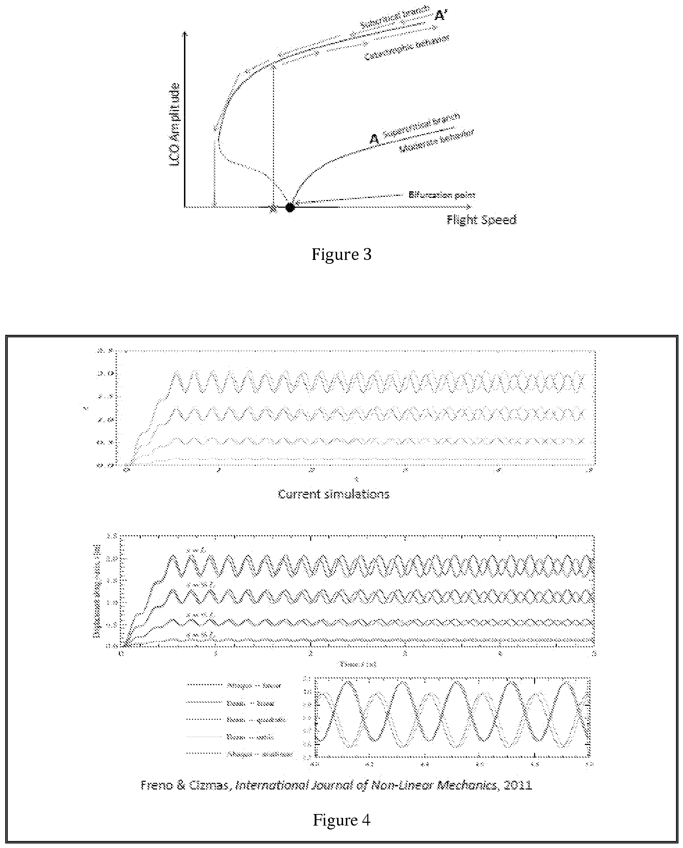

In another exemplary aspect, the method for air flow sensing can include measuring beam deflections of a cantilever (see Figure 2), extracting information about air flow, and determining an airspeed, an angle of attack, and/or sideslip, based on extracted information. Figure 3 is a graph showing the nonlinear aspects that contribute to unstable responses of this aeroelastic system. Solid and dashed lines represent stable and unstable solutions, respectively. Arrows show the aeroelastic response as the flight speed is varied and illustrate the hysteresis behavior associated with the subcritical instability

The flow sensor can provide accurate measurements of the airspeed and angle of attack at which the air travels across a flying vehicle. In particular, the method and system can be advantageous for small vehicles (e.g., UAVs and micro air vehicles). The method can include detecting vibrations of a beam attached to a vehicle to extract information about the surrounding flow. Interacting with an incoming air stream, the beam can undergo two flexural and torsional vibrations that are coupled via geometric and inertia nonlinearities and aerodynamic loading.

Combined nonlinear aspects that contribute to unstable responses of this aeroelastic system could be either of the supercritical or subcritical type. Referring again to Figure 4, in the supercritical instability, the system response can be stable to any disturbance below the flutter boundary (Hopf bifurcation). Beyond this boundary, nonlinearities can yield limit cycle oscillations (LCOs) whose amplitude increases slowly with increasing flight speed. In the subcritical type, a sudden jump to a large-amplitude LCO takes place at or below the flutter speed, depending on the initial conditions. From a design standpoint, the geometric and the material properties can be selected and/or designed such that a vibrating beam undergoes supercritical vibrations to exploit this type of instability for sensing purposes. Furthermore, the beam can be designed so that the flutter speed (at which the beam starts to oscillate) is inside the operating range of variations of the airspeed.

The structural model used in some embodiments can be a nonlinear displacement-based beam model. This model can be derived for inextensional and non-uniform cantilevered beams with a straight elastic axis and without neither overly complex cross-sections nor significant warping. The beam degrees of freedom can comprise two flexural (or bending) components, $w(s, t)$ and $v(s, t)$, along the $z$ and $y$ directions, respectively, and torsional component $\varphi(s, t)$ (see Figure 2). The equations of motion can be obtained using the Galerkin method and can include up to third-order nonlinearities that account for flexural- flexural-torsional coupling.

The displacements $w$ and $v$ and torsion $\varphi$ are approximated by

$$w(s,t) = \sum_{i=1}^{l} w_i(t)W_i(s), \quad v(s,t) = \sum_{i=1}^{m} v_i(t)V_i(s), \quad \varphi(s,t) = \sum_{i=1}^{n} \varphi_i(t)\Phi_i(s) \qquad (1)$$

where the shape functions, $W_i$'s, $V_i$'s, and $\Phi_i$'s correspond to bending and torsional motions, respectively, and can be derived from the uncoupled linear equations. The governing equations of the time-varying coefficients $w_i$'s, $v_i$'s, and $\varphi_i$'s can be given by

$$(M_L + M_{NL})\begin{pmatrix} \ddot{v} \\ \ddot{v} \\ \ddot{\varphi} \end{pmatrix} + (C_L + C_{NL})\begin{pmatrix} \dot{v} \\ \dot{v} \\ \dot{\varphi} \end{pmatrix} + (K_L + K_{NL})\begin{pmatrix} v \\ v \\ \varphi \end{pmatrix} = F_L + F_{NL} \qquad (2)$$

where

$$\underline{w} = (w_1 \cdots w_l)^T, \quad \underline{v} = (v_1 \cdots v_m)^T, \quad \underline{\varphi} = (\varphi_1 \cdots \varphi_n)^T$$

and the mass, damping, and stiffness matrices can be obtained from numerical integration of the shape functions and beam characteristics such as cross-section, mass distribution, mass moment of inertia, and stiffness over the beam length. The linear structural damping matrix $C_L$ can be considered as proportional to the mass matrix (Rayleigh damping). $F = F_L + F_{NL}$ is a vector of external forces and moments that can arise due to excitation, inertia (in presence of rigid-body motion), or aerodynamic loading. The aerodynamic forces and moments can be computed from the pressure distribution over the beam which is the manifestation of the interactions between the beam and the incoming air stream.

For the sake of subsequent analyses, let the time coefficients be represented by

$$X = (w_1 \cdots w_l \quad w_1 \cdots w_l \quad w_1 \cdots w_l) \qquad (3)$$

introduce the vector

$$Y = \begin{pmatrix} X & \dot{X} \end{pmatrix}^T \qquad (4)$$

and write the equations of motion in first-order differential form as

$$\dot{Y} = \begin{pmatrix} \dot{X} \\ (M_L + M_{NL})^{-1}(F_L + F_{NL} - (C_L + C_{NL})X - (K_L + K_{NL})X) \end{pmatrix} \qquad (5)$$

or

$$\dot{Y} = F(Y) \qquad (6)$$

Various steps can be verified by commercially available software packages. For example, the implementation of the beam model and comparison of the natural frequencies and forced response of a tapered beam (cross-section is linearly varying along the beam elastic axis) with those obtained by Freno and Cizmas (2011) can be accomplished with the finite element software package Abaqus. The tapered beam can be assumed homogeneous with a mass density of 2710 kg/m3, a Young's modulus of 70 GPa, and a modulus of rigidity of 26 GPa. The beam can be 10-m long and consist of a 1m $\times$ 0.5m cross-section at the fixed end and a 0.5m $\times$ 0.5m cross-section at the free end. More details on the material and geometric properties can be found in Freno and Cizmas (2011). The frequencies corresponding to the first five vibrational modes obtained from the finite element analysis by Abaqus based on a mesh size of 160 $\times$ 8 $\times$ 12 are compared with those obtained from the linear contribution to the beam model using five shape functions for each of the three independent displacements. The corresponding results are presented in Table 1. The frequency response predicted by the beam model agrees well with the finite element response as can be inferred from the small values of the absolute errors.

Table 1: First five frequencies of tapered beam. Comparison with finite element analysis.

| Mode | Finite element analysis Abaqus (Hz) | Beam model current (Hz) | Error (%) |
|---|---|---|---|
| 1 | 5.0520 | 5.1015 | 0.9 |
| 2 | 8.9048 | 9.0384 | 1.5 |
| 3 | 27.223 | 27.720 | 1.8 |
| 4 | 41.601 | 43.1493 | 3.7 |
| 5 | 71.828 | 74.3671 | 3.5 |

Next, the forced response induced by a time-varying force applied at the free end can be considered. The transient displacement along the y-axis can be computed and compared with that obtained by Freno and Cizmas (2011) from the nonlinear beam model and the finite element analysis using Abaqus. The y-displacements at the points located along the elastic axis at $s = L$, ¾$L$, ½$L$, ¼$L$, where $L$ is the beam length, are shown in Figure 4. The results are obtained from the linear and nonlinear settings of each of the models. The current simulations are shown in the upper plot, while those obtained by Freno and Cizmas (2011) are shown in the lower plot. Significant differences between the linear and nonlinear responses (in terms of frequency and amplitude) are apparent. Except a slight discrepancy in the frequency that can be seen for long times, there is good agreement between the results obtained from the nonlinear model and those obtained from the finite element analysis using Abaqus. The current model can capture the nonlinear aspects of the beam vibrations and reproduce results of higher fidelity solvers.

A flow solver based on the unsteady vortex lattice method (UVLM) can be used for the prediction of the unsteady aerodynamic forces and moments. The unsteady vortex lattice method can compute the loads generated by pressure differences across the beam surface resulting from acceleration-and circulation-based phenomena. This can account for unsteady effects such as added mass forces, the growth of bound circulation, and the wake. UVLM can apply to ideal fluids, incompressible, inviscid, and irrotational flows where the separation lines are known a priori. UVLM requires the fluid to leave the beam smoothly at the trailing edge (through, e.g., imposing the Kutta condition) and does not generally cover the cases of flow separation at the leading-edge and extreme situations where strong beam-wake interactions take place. UVLM can be an adequate method.

The UVLM solver can, for example, proceed as follows:
The beam surface can be discretized into a lattice of vortex rings. Each vortex ring can consist of four short straight vortex segments, with a collocation point placed at its center.

A no-penetration condition can be imposed at the collocation points. The normal component of the velocity due to beam-beam interactions, wake-beam interactions, and free-stream velocities can be assumed to vanish at each collocation point. Using, for example, the Biot-Savart law to compute velocities in terms vorticity circulations $\Gamma$ can yield a linear system of equations that can be expressed as:

$$A^{\text{be-be}}\Gamma_{\text{be}} = A^{\text{wa-be}}\Gamma_{\text{wa}} + V_n \qquad (7)$$

where $A^{\text{be-be}}$ and $A^{\text{wa-be}}$ are beam-beam and wake-beam influence matrices, respectively. The vector $V_n$ collects the normal component of the velocity at each collocation point due to the beam motion. The vectors $\Gamma^{\text{be}}$ and $\Gamma^{\text{wa}}$ stand for the circulations of the vortex elements on the beam and wake, respectively.

Vorticity can be introduced to the wake by, for example, shedding vortex segments from the trailing edge. These vortices can be moved with the fluid particle velocity and their individual circulation can remain constant (i.e., $\Gamma_{\text{wa}}^{t+\Delta t} = \Gamma_{\text{wa}}^{t}$). The wake elements can be truncated in the flow field and load computation and only those which are located within $10\,b$ are accounted for, where $b$ is the beam thickness. This truncation can significantly speed up simulation while introducing negligible loss in the solution accuracy.

The pressure can be evaluated at each collocation point based on, for example, the unsteady Bernoulli equation and then can be integrated over the beam surface to compute the aerodynamic forces and moments.

Aeroelastic coupling can be performed with an iterative scheme that can account for the interaction between the aerodynamic loads and the vibrations of the beam. The procedure can be based on, for example, Hamming's fourth-order predictor-corrector method. The Hamming method requires the solution to be known at three previous time steps and the current one. Thus, different schemes can be considered to generate the solution at the first three time steps. For the first time step, Euler and modified Euler methods can be used as predictor-corrector schemes. For the second time step, Adams-Bash forth two-step predictor and Adams-Moulton two-step corrector schemes can be used. For the third time step, Adams-Bashforth three-step predictor and Adams-Moulton three-step corrector schemes can be used. All of the above predictor-corrector schemes are based on a combination of explicit and implicit techniques to solve a system of first-order differential equations and are detailed below.

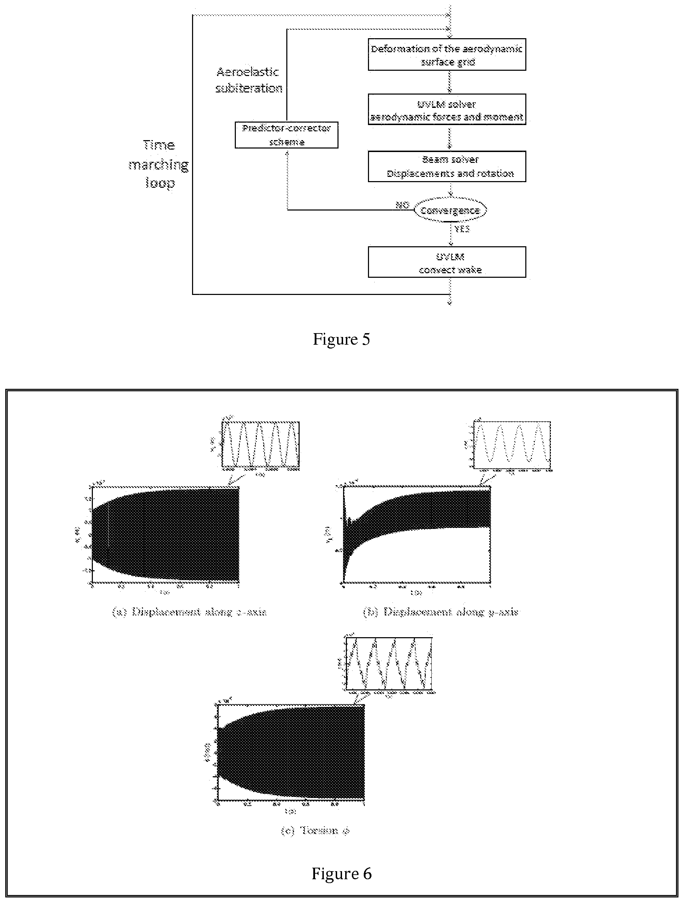

An illustration of the aeroelastic coupling is presented in Figure 5. To proceed with the numerical integration procedure, let $\Delta t$ be the time step size and introduce the following variables

$$t_j = j\Delta t$$

$$Y^j = Y(t_j)$$

$$\dot{Y}^j = \dot{Y}(t_j)$$

$$F^j = F(Y(t_j))$$

The numerical procedure can include the following steps:

At $t = t_0$, use the initial conditions to evaluate the right-hand side

$$\dot{Y}^0 = F^0 = F(Y^0)$$

At $t = t_1$, convect the vorticity at the trailing-edge to its new position based on the state of the system at $t = t_0$ and use the geometry information to compute the pressure distribution over the beam via the unsteady vortex lattice method. The predicted solution, $Y_p^1$, is computed using the forward Euler method

$$\mathrm{Y}_p^1 = \mathrm{Y}^0 + \Delta t \mathrm{F}^0$$

The predicted solution is corrected using the modified Euler method

$$\mathrm{Y}_{k+1}^1 = \mathrm{Y}^0 + \frac{\Delta t}{2}\left(\mathrm{F}_k^1 + \mathrm{F}^0\right)$$

where $k$ is the iteration number and

$$\mathrm{F}_k^1 = \mathrm{F}\left(\mathrm{Y}_k^1\right)$$

$$\mathrm{Y}_1^1 = \mathrm{Y}_p^1$$

The previous correction is repeatedly applied until

$$e^1 = \left\|\mathrm{Y}_{k+1}^1 - \mathrm{Y}_k^1\right\|_\infty$$

is less than a prescribed tolerance $\varepsilon$.

If $e^1 > \varepsilon$, then we set

$$\mathrm{Y}_{k+1}^1 = \mathrm{Y}_k^1$$

$$\mathrm{F}_k^1 = \dot{\mathrm{Y}}_{k+1}^1 = \dot{\mathrm{Y}}_k^1$$

and keep correcting the solution using

$$\mathrm{Y}_{k+1}^1 = \mathrm{Y}^0 + \frac{\Delta t}{2}\left(\mathrm{F}_k^1 + \mathrm{F}^0\right)$$

If $e^1 < \varepsilon$, then set

$$\mathrm{Y}^1 = \mathrm{Y}_{k+1}^1$$

$$\mathrm{Y}^1 = \mathrm{Y}_{k+1}^1 = \mathrm{F}^1 = \mathrm{F}\left(\mathrm{Y}^1\right)$$

and compute the solution at $t = t_2$.

At $t = t_2$, convect the vorticity at the trailing-edge to its new position based on the state of the system at $t = t_1$, update the vortex rings of the wake, and use the geometry information to compute the pressure distribution over the beam via the unsteady vortex lattice method. The predicted solution $\mathrm{Y}_{k+1}^1$, is computed using the Adams-Bashforth two-step predictor method

$$\mathrm{Y}_p^2 = \mathrm{Y}^1 + \frac{\Delta t}{2}\left(3\mathrm{F}^1 - \mathrm{F}^0\right)$$

The predicted solution is corrected using the Adams-Moulton two-step predictor method

$$\mathrm{Y}_{k+1}^2 = \mathrm{Y}^1 + \frac{\Delta t}{12}\left(5\mathrm{F}_k^2 + 8\mathrm{F}^1 - \mathrm{F}^0\right)$$

where

$$\mathrm{F}_k^2 = \mathrm{F}\left(\mathrm{Y}_k^2\right)$$

$$\mathrm{Y}_1^2 = \mathrm{Y}_p^2$$

The previous update is repeatedly applied until

$$e^2 = \left\|\mathrm{Y}_{k+1}^2 - \mathrm{Y}_k^2\right\|_\infty$$

is less than a prescribed tolerance $\varepsilon$.
If $e^2 > \varepsilon$, then set

$$\mathrm{Y}_{k+1}^2 = \mathrm{Y}_k^2$$

$$\mathrm{F}_k^2 = \dot{\mathrm{Y}}_{k+1}^2 = \dot{\mathrm{Y}}_k^2$$

and keep correcting the solution using

$$\mathrm{Y}_{k+1}^2 = \mathrm{Y}^1 + \frac{\Delta t}{12}\left(5\mathrm{F}_k^2 + 8\mathrm{F}^1 - \mathrm{F}^0\right)$$

If $e^2 < \varepsilon$, then set

$$\mathrm{Y}^2 = \mathrm{Y}_{k+1}^2$$

$$\dot{\mathrm{Y}}^2 = \dot{\mathrm{Y}}_{k+1}^2$$

and compute the solution at $t = t_3$.
At $t = t_3$, convect the vorticity at the trailing-edge to its new position based on the state of the system at $t = t_2$ and update the vortex rings of the wake, and use the geometry information to compute the pressure distribution over the beam via the unsteady vortex lattice method. The predicted solution, $\mathrm{Y}_p^3$, is computed using the Adams-Bashforth three-step predictor method

$$\mathrm{Y}_p^3 = \mathrm{Y}^2 + \frac{\Delta t}{12}\left(23\mathrm{F}^2 - 6\mathrm{F}^1 + 5\mathrm{F}^0\right)$$

The predicted solution is corrected using the Adams-Moulton three-step predictor method

$$\mathrm{Y}_{k+1}^3 = \mathrm{Y}^2 + \frac{\Delta t}{24}\left(9\mathrm{F}_k^3 + 19\mathrm{F}^2 - 5\mathrm{F}^1 + \mathrm{F}^0\right)$$

where

$$F_k^3 = F\left(Y_k^3\right)$$

The previous update is repeatedly applied until

$$e^3 = \left\|Y_{k+1}^3 - Y_k^3\right\|_\infty$$

is less than a prescribed tolerance $\varepsilon$.

If $e^3 > \varepsilon$, then set

$$Y_{k+1}^3 = Y_k^3$$

$$F_k^3 = \dot{Y}_{k+1}^3 = \dot{Y}_k^3$$

and keep correcting the solution using

$$Y_{k+1}^3 = Y^2 + \frac{\Delta t}{24}\left(9F_k^3 + 19F^2 - 5F^1 + F^0\right)$$

If $e^3 < \varepsilon$, then set

$$Y^3 = Y_{k+1}^3$$

$$\dot{Y}^3 = \dot{Y}_{k+1}^3$$

and compute the solution at $t = t_4$.

For $t = t_j = t_4, t_5, t_6...$, convect the vorticity at the trailing-edge to its new position based on the state of the system at $t = t_j - 1$ and update the vortex rings of the wake, and use the geometry information at aeroelastic subiteration to compute the pressure distribution over the beam via the unsteady vortex lattice method and then evaluate the aerodynamic forces and moments needed to determine the right-hand side of Equation (2). The predicted solution, $Y_p^j$, can be computed using the Hammings fourth-order modified predictor-corrector method

$$Y_p^j = Y^{j-4} + \frac{4}{3}\Delta t\left(2F^{j-1} - F^{j-2} + 2F^{j-3}\right)$$

The predicted solution is modified using the local truncation error from the previous time step

$$Y_1^j = Y_p^j + \frac{112}{6}e^{j-1}$$

where

$$e^{j-1} = Y_{k+1}^{j-1} - Y_k^{j-1}$$

The modified predicted solution is corrected using the correction equation

$$Y_{k+1}^j = \frac{1}{8}\left[9Y^{j-1} - Y^{j-3} + 3\Delta t\left(F_k^j + 2F^{j-1} - F^{j-2}\right)\right]$$

where

$$F_k^j = F\left(Y_k^j\right)$$

$$Y_1^j = Y_p^j$$

The previous solution is repeatedly applied until

$$e^j = \left\|Y_{k+1}^j - Y_k^j\right\|_\infty$$

is less than a prescribed tolerance $\varepsilon$.

The local truncation error is estimated for use in the current and next time step

$$e^j = \frac{9}{121}\left(Y_{k+1}^j - Y_p^{j-1}\right)$$

The final solution at step j is

$$Y^j = Y_{k+1}^j - e^j$$

To calculate the solution at the next time step, we set

$$Y^{j-4} = Y^{j-3}$$

$$Y^{j-3} = Y^{j-2}$$

$$Y^{j-2} = Y^{j-1}$$

$$Y^{j-1} = Y^j$$

$$e^{j-1} = e^j$$

and repeat previous steps as much as desired.

Stopping conditions are a limit on the number of subiterations $N_s$ and a maximum value for the error between two successive solutions within one iteration $\varepsilon$. In our simulations, $N_s$ is set equal to 20 and $\varepsilon$ is equal to $10^{-6}$. During the subiterations, the position of the wake is not necessarily recalculated. The vorticity can be convected at the trailing-edge into the wake and the wake position can be updated once the solution converges within an iteration.

Typical material and geometry properties for a beam made of silicon with a uniform square cross section are presented in Table 2. Note that the properties of silicon may vary depending on the type of silicon used, which allows the designer some flexibility in optimization. Othe r materials like metals, laminates (i.e. bimorphs), conductive fibers, etc, can be also used. The center mass of the cross-sections of the undeformed beam can be assumed to lie on the elastic axis. As for numerical integration, the wing can be discretized into, for example, 8 panels along the beam length and, for further example, 6 chordwise panels, providing 48 vortex rings for the UVLM solver. A small time step of $\Delta t = 5 \cdot 10^{-6}$ s can be selected and the tolerance on the norm of the residual vectors $\varepsilon$ can be taken equal to $10^{-6}$. Under this setting, the aeroelastic solutions can converge in less than 5 subiterations of the fluid-structure interaction scheme.

Table 2: Flow sensor specifications.

| Beam dimensions $L(m)$ x $b(m)$ x $h(m)$ | Mass density (polysilicon material) $\rho(\text{kg/m}^3)$ | Young's modulus $E$ (GPa) | Rigidity modulus $G$ (GPa) |
|---|---|---|---|
| $10^{-2}$ x $5 \cdot 10^{-4}$ x $5 \cdot 10^{-4}$ | 2330 | 190 | 69 |

In Figures 6a-c, time histories of flexural and torsional vibrations of a beam as result of the interactions with incompressible flow are shown. The airspeed considered in these simulations is equal to 15 m/s. After a transient phase, the beam deflections can achieve bounded oscillations, referred as limit cycle oscillations (LCO). These moderate oscillations, obtained beyond the flutter boundary (at which the beam starts to undergo nondecaying oscillations), are the manifestation of Hopf bifurcation and correspond to supercritical instability (curve A shown in Figure 3). A longer beam (higher aspect ratio) can yield subcritical instability (i.e., large LCO amplitudes that may lead to the structure failure). However, appropriate beam dimensions can be selected for the intended application.

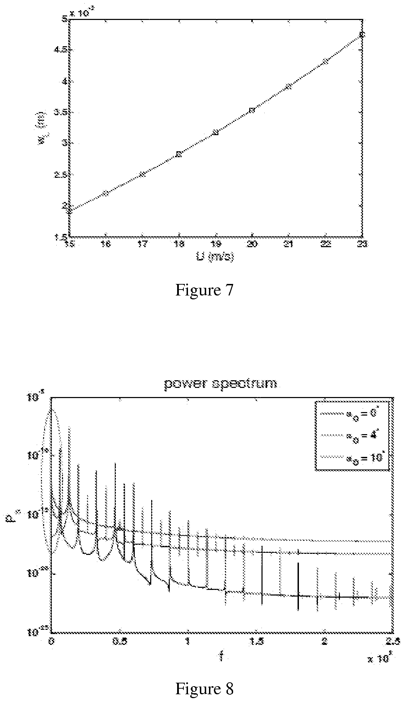

Figure 8 depicts a calibration curve. The amplitude of LCO of the z-axis displacement $w$ at the beam tip (i.e., $s = L$) is shown as a function of the airspeed U (m/s). The angle of attack $\alpha_0$ is set equal to 0°. The airspeed is varied between 15 and 23 m/s. This interval can be expanded depending on the operating range of the flying vehicle to which the beam is attached. The LCO amplitude increases, roughly in a linear fashion, as the airspeed increases. Such a calibration curve can be utilized to extract airspeed as a measurement of vibration amplitudes. In practical situations, different transduction principles can be used to generate the readout signal of the beam deflections such as capacitive and piezoelectric. For capacitive detection, the voltage supply can be provided using a small and light lithium-ion button-cell battery, in which they typically possess a diameter of 6mm and a height of 1.5mm only. On the other hand, if piezoelectric cantilevers were to be used to generate the readout signal, then a piezoelectric bimorph would be utilized. Typical Piezo bimorphs vary in length from a few millimeters to a few centimeters, which allows for effective and easy geometry optimization.

The torsional deflection of the beam can be analyzed for detecting the angle of attack. In Figure 8, the power spectrum of the torsional deflection $\varphi$ at the beam tip for different values of the angle of attack $\alpha_0$ is shown. For $\alpha_0 = 0$, a peak occurs at the zero frequency, indicating that the beam oscillates around a static equilibrium position. The presence of multiple peaks at many frequencies can be the manifestation of the system's nonlinearity.

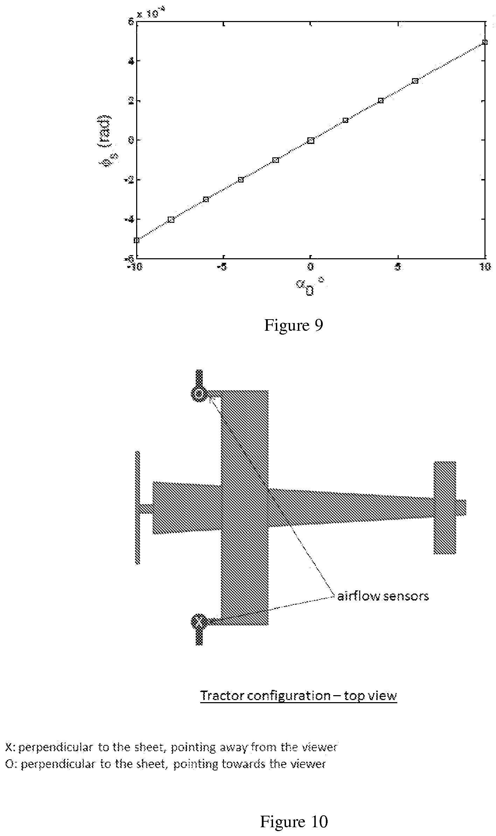

Figure 9 shows a plot of variations of the amplitude of the static deflection at the beam tip with the angle of attack $\alpha_0$. The angle of attack is varied $\pm 5°$. Small aircrafts are often designed to operate within this range in order to avoid undesirable aerodynamic effects such as stall which could be accompanied with a large loss of the lift force. Furthermore, the UVLM solver considered here to simulate the aeroelastic behavior of the beam does not capture flow separation at the leading-edge caused by high angles of attack. The static deflection can increases linearly with the angle of attack $\alpha_0$ and switch from negative to positive values as the value of ot0crosses zero. Therefore, the static deflection can be used as a detector of the angle of attack. The linear dependence of the amplitude of LCO of the flexural vibrations to the air speed and static deflection of the torsional vibrations to the angle of attack indicates that sensing these motions can produce easy measurement of these aerodynamic quantities.

Figure 10 shows the airflow sensors placement for the Tractor-type aircraft. In this setting, two sets of airflow sensors are mounted perpendicularly, one horizontal, and one vertical. The sensors are placed on struts in front of the wing (to avoid the effect of wingtip vortices that may bias the airflow information). As for the vertical sensors, one sensor is pointing down and the other is pointing up to allow for sideslip measurements in all angle of attack configurations.

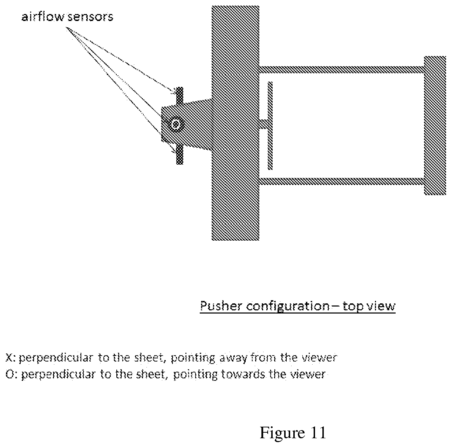

Figure 11 shows the airflow sensors placement for the Pusher-type aircraft. In this setting, four sensors (one sensor pointing down is not shown in the figure) are mounted at 90 degrees of each other in the front of the plane, as close to the nose tip as practical (to protrude outside of the boundary layer). This configuration allows for angle of attack and sideslip measurements without being affected by the wake resulting from flow separation.

All of the methods disclosed and claimed herein can be made and executed without undue experimentation in light of the present disclosure. In addition, modifications may be made to the disclosed apparatus and components may be eliminated or substituted for the components described herein where the same or similar results would be achieved.

The various techniques, methods, and systems described above can be implemented in part or in whole using computer-based systems and methods. Additionally, computer-based systems and methods can be used to augment or enhance the functionality described above, increase the speed at which the functions can be performed, and provide additional features and aspects as a part of or in addition to those described elsewhere in this document. Various computer-based systems, methods and implementations in accordance with the above-described technology are presented below.

In one implementation, a general-purpose computer can have an internal or external memory for storing data and programs such as an operating system (e.g., DOS, Windows 2000™, Windows XP™, Windows NT™, OS/2, iOS, UNIX or Linux) and one or more application programs. Examples of application programs include computer programs implementing the techniques described herein, authoring applications (e.g., word processing programs, database programs, spreadsheet programs, simulation programs, engineering programs, or graphics programs) capable of generating documents or other electronic content; client applications (e.g., an Internet Service Provider (ISP) client, an e-mail client, or an instant messaging (IM) client) capable of communicating with other computer users, accessing various computer resources, and viewing, creating, or otherwise manipulating electronic content; and browser applications (e.g., Microsoft's Internet Explorer or Google Chrome) capable of rendering standard Internet content and other content formatted according to standard protocols such as the Hypertext Transfer Protocol (HTTP), HTTP Secure, or Secure Hypertext Transfer Protocol.

One or more of the application programs can be installed on the internal or external storage of the general-purpose computer. Alternatively, in another implementation, application programs can be externally stored in or performed by one or more device(s) external to the general-purpose computer.

The general-purpose computer includes a central processing unit (CPU) for executing instructions in response to commands, and a communication device for sending and receiving data. One example of the communication device is a modem. Other examples include a transceiver, a communication card, a satellite dish, an antenna, a network adapter, network interface card, mobile internet device, or some other mechanism capable of transmitting and receiving data over a communications link through a wired or wireless data pathway.

The general-purpose computer can include an input/output interface that enables wired or wireless connection to various peripheral devices. Examples of peripheral devices include, but are not limited to, a mouse, a mobile phone, a personal digital assistant (PDA), a smartphone, a tablet computer, a keyboard, a display monitor with or without a touch screen input, and an audiovisual input device. In another implementation, the peripheral devices can themselves include the functionality of the general-purpose computer. For example, the mobile phone or the PDA can include computing and networking capabilities and function as a general purpose computer by accessing the delivery network and communicating with other computer systems. Examples of a delivery network include the Internet, the World Wide Web, WANs, LANs, analog or digital wired and wireless telephone networks (e.g., Public Switched Telephone Network (PSTN), Integrated Services Digital Network (ISDN), or Digital Subscriber Line (xDSL)), radio, television, cable, or satellite systems, and other delivery mechanisms for carrying data. A communications link can include communication pathways that enable communications through one or more delivery networks.

In one implementation, a processor-based system (e.g., a general-purpose computer) can include a main memory, preferably random access memory (RAM), and can also include a secondary memory. The secondary memory can include, for example, a hard disk drive or a removable storage drive, representing a floppy disk drive, a magnetic tape drive, an optical disk drive (Blu-Ray, DVD, CD drive), magnetic tape, paper tape, punched cards, standalone RAM disks, solid state drive, or flash memory devices including memory cards, USB flash drives, solid-state drives, etc. The removable storage drive reads from or writes to a removable storage medium. A removable storage medium can include a floppy disk, magnetic tape, optical disk (Blu-Ray disc, DVD, CD) a memory card (CompactFlash card, Secure Digital card, Memory Stick), paper data storage (punched card, punched tape), etc., which can be removed from the storage drive used to perform read and write operations. As will be appreciated, the removable storage medium can include computer software or data.

In alternative embodiments, the secondary memory can include other similar means for allowing computer programs or other instructions to be loaded into a computer system. Such means can include, for example, a removable storage unit and an interface. Examples of such can include a program cartridge and cartridge interface (such as can be found in video game devices), a removable memory chip (such as an EPROM or PROM) and associated socket, and other removable storage units and interfaces, which allow software and data to be transferred from the removable storage unit to the computer system.

In one embodiment, the computer system can also include a communications interface that allows software and data to be transferred between the computer system and external devices. Examples of communications interfaces can include a modem, a network interface (such as, for example, an Ethernet card), a communications port, and a PCMCIA slot and card. Software and data transferred via a communications interface are in the form of signals, which can be electronic, electromagnetic, optical or other signals capable of being received by a communications interface. These signals are provided to a communications interface via a channel capable of carrying signals and can be implemented using a wireless medium, wire or cable, fiber optics or other communications medium. Some examples of a channel can include a phone line, a cellular phone link, an RF link, a network interface, and other suitable communications channels.

In this document, the terms "computer program medium" and "computer usable medium" are generally used to refer to media such as a removable storage device, a disk capable of installation in a disk drive, and signals on a channel. These computer program products provide software or program instructions to a computer system.

Computer programs (also called computer control logic) are stored in main memory or secondary memory. Computer programs can also be received via a communications interface. Such computer programs, when executed, enable the computer system to perform the features as discussed herein. In particular, the computer programs, when executed, enable the processor to perform the described techniques. Accordingly, such computer programs represent controllers of the computer system.

In an embodiment where the elements are implemented using software, the software can be stored in, or transmitted via, a computer program product and loaded into a computer system using, for example, a removable storage drive, hard drive or communications interface. The control logic (software), when executed by the processor, causes the processor to perform the functions of the techniques described herein.

In another embodiment, the elements are implemented primarily in hardware using, for example, hardware components such as PAL (Programmable Array Logic) devices, application specific integrated circuits (ASICs), or other suitable hardware components. Implementation of a hardware state machine so as to perform the functions described herein will be apparent to a person skilled in the relevant art(s). In yet another embodiment, elements are implanted using a combination of both hardware and software.

In another embodiment, the computer-based methods can be accessed or implemented over the World Wide Web by providing access via a Web Page to the methods described herein. Accordingly, the Web Page is identified by a Universal Resource Locator (URL). The URL denotes both the server and the particular file or page on the server. In this embodiment, it is envisioned that a client computer system interacts with a browser to select a particular URL, which in turn causes the browser to send a request for that URL or page to the server identified in the URL. Typically the server responds to the request by retrieving the requested page and transmitting the data for that page back to the requesting client computer system (the client/server interaction is typically performed in accordance with the hypertext transport protocol or HTTP). The selected page is then displayed to the user on the client's display screen. The client can then cause the server containing a computer program to launch an application to, for example, perform an analysis according to the described techniques. In another implementation, the server can download an application to be run on the client to perform an analysis according to the described techniques.

REFERENCES

Aboelkassem Y, Nayfeh A, and Ghommem M (2010) Bio-mass Sensor Using an Electrostatically Actuated Microcantilever in a Vaccum MicroChannel. Microsystem Technologies 16: 1749-1755.

Acar C and Shkel AM (2004) Structural design and experimental characterization of torsional micromachined gyroscopes with non-resonant drive mode. Journal of Micromechanics and Microengineering 14(15): 15-25.

Bhadbhade V, Jalili N, and Mahmoodi SN (2008) A novel piezoelectrically actuated flexural/torsional vibrating beam gyroscope. Journal of Sound and Vibration 311: 1305-1324.

Changizi MA, Roman DE, and Stiharu I (2011) Detection of bio-chemical reactions through micro structural interactions. Journal of Optoelectronics and Advanced Materials 13: 1010-1015.

DSPM Industria, available at www.dspmindustria.it/tool/download .php?id=3612&idst=1393.

Esmaeili M, Jalili N and Durali M (2006) Dynamic modeling and performance evaluation of a vibrating beam microgyroscope under general support motion. Journal of Sound and Vibration 301(1-2): 146-164.

Fei H, Zhu R, Zhou Z, and Wang J (2007) Aircraft flight parameter detection based on a neural network using multiple hot-film flow speed sensors. Smart Materials and Structures 16:1239; doi:10.1088/0964-1726/16/4/035.

Freno BA and Cizmas PGA (2011) A computationally efficient non-linear beam model. International Journal of Non-Linear Mechanics 46: 854-869.

Ghommem M, Nayfeh AH, Choura S, Najar F and Abdel-Rahman EM (2010) Modeling and performance study of a beam microgyroscope. Journal of Sound and Vibration 329(23): 4970-4979.

Ghommem M, Hajj MR, and Nayfeh AH (2010) Uncertainty Analysis near Bifurcation of an Aeroelastic System. Journal of Sound and Vibration 329(23): 3335-3347.

Ghommem M, Nayfeh AH, and Choura S (2012) Model Reduction and Analysis of a Vibrating Beam Microgyroscope,. Journal of Vibration and Control doi:10.1177/1077546312446626.

Ghommem M, Hajj MR, Mook DT, Stanford BK, Beran PS, and Watson LD (2012) Global optimization of actively-morphing flapping wings. Journal of Fluids and Structures 30: 210-228.

Ghommem M, Abdelkefi A, Nuhait AO, and Hajj MR (2012) Aeroelastic analysis and nonlinear dynamics of an elastically mounted wing. Journal of Sound and Vibrations 331: 5774-5787.

Ghommem M, Collier N, Niemi A, and Calo VM (2013) On Shape Optimization of Flapping Wings and their Performance Analysis. Computers and Fluids, under review. Preprint available at online from Cornell University Library at arxiv.org/abs/1211.2583.

Hall BD, Preidikman S, Mook DT, and Nayfeh AH (2001) Novel Strategy for Suppressing the Flutter Oscillations of Aircraft Wings. AIAA Journal 39(10): 1843-1850.

Hsu JC, Lee HL, and Chang WJ (2007) Flexural vibration frequency of atomic force microscope cantilevers using the Timoshenko beam model. Nanotechnology 18 285503 doi:10.1088/0957-4484/18/28/285503.

Kim S, Nam T, and Park S (2004) Measurement of flow direction and velocity using a micromachined flow sensor. Sensors and Actuators Physics A 114:312318. doi:10.1016/j.sna.2003.12.019.

Lee CY, Wen CY, Hou HH, Yang RJ, Tsai CH, and Fu LM (2009) Design and characterization of MEMS-based flow-rate and flow-direction microsensor. Micro fluidics and Nano fluidics 36: 363-371.

Liu H, Zhang S, Kathiresan R, Kobayashi T, and Lee C (2012) Development of piezoelectric microcantilever flow sensor with wind-driven energy harvesting capability. Applied Physics Letters 100:223905; doi: 10.1063/1.4723846.

Ma RH, Chou PC,Wang YH, Hsueh TH, Fu LM, and Lee CY (2009) A microcantilever-based gas flow sensor for flow rate and direction detection. Microsystem Technologies 15:1201-1205.

Ma RH, Ho MC, Lee CY, Wang YH, and Fu LM (2006) Micromachined silicon cantilever paddle for high-flow-rate sensing. Sensors and Materials 18(8):405417.

Ma RH, Lee CY,Wang YH, and Chen HJ (2008) Microcantilever-based weather station for temperature, humidity and flow rate measurement. Microsystem Technologies 14:971977. doi:10.1007/s00542-007-0458-2.

Maenaka K, Konishi Y and Maeda M (1996) Analysis of a highly sensitive silicon gyroscope with cantilever beam as vibrating mass. Sensors and Actuators 54(3): 568-573.

Mohite S, Patil N, and Pratap R (2006) Design, modeling and simulation of vibratory micromachined gyroscopes. Journal of Physics doi: 10.1088/1742- 6596/34/1/125.

Nayfeh AH, Ghommem M, and Hajj MR (2011) Normal Form Representation of The Aerodynamic Response of The Goland Wing. Nonlinear Dynamics 67(3): 1847- 1861.

Nayfeh AH, Abdel-Rahman EM, and Ghommem M (2013) A Novel Frequency-Domain Microgyroscope. Journal of Vibration and Control. Under review.

Preidikman S and Mook DT (2000) Time-Domain Simulations of Linear and Non-Linear Aeroelastic Behavior. Journal of Vibration and Control 6(8): 1135-1176.

Swiss air data system, available online at www.swissairdata.com/index .php/adp-5.html.

Stanford BK and Beran PS (2011) Optimal thickness distributions of aeroelastic flapping shells. Aerospace Science and Technology, available online at dx.doi.org/10.1016/j.bbr.2011.03.031.

Que R and Zhu R (2012) Aircraft Aerodynamic Parameter Detection Using Micro Hot-Film Flow Sensor Array and BP Neural Network Identification. Sensors 12, 10920{ 10929; doi: 10.3390/s 120810920.

Yeh YL,Wang CC, Jang MJ, Lin YP, and Chen KS (2008) Nonlinear dynamic response of cantilever beam tip during atomic force microscopy (AFM) nanolithography of copper surface. Journal of Physics 96 012199 doi:10.1088/1742-6596/96/1/012199.

Wang Z (2004) Time-domain simulations of aerodynamic forces on three-dimensional configurations, unstable aeroelastic responses, and control by neural network systems, PhD Dissertation, Virginia Tech, Blacksburg, 2004.

Embodiments have been described herein in exemplary forms for instructing a person of ordinary skill in the art. Such embodiments and/or forms are not intended to limit the following claims to specific structures or steps.

**Claims**

1. A method for air flow sensing, comprising:

   measuring beam deflections of a cantilever (101);
   extracting information about air flow using the measured beam deflections of the cantilever (101); and
   determining one or more of an airspeed, an angle of attack, and a sideslip, from the extracted information,
   **characterized in that**
   the beam deflections of the cantilever (101) are measured with a transducer (102) and include measuring two bending amplitudes of the cantilever (101) along two axes that are perpendicular to each other and a torsional amplitude of the cantilever (101).

2. The method of claim 1, further comprising generating calibration data from bending amplitudes or torsion amplitudes of the cantilever (101), wherein one or more of the bending amplitudes and the torsion amplitudes corresponds to a freestream velocity and the angle of attack, wherein the calibration data is used in the determining step.

3. The method of claim 1, wherein the cantilever (101) comprises a cantilever surface; wherein measuring beam deflections comprises measuring deformation of the cantilever surface; and wherein determining the airspeed and the angle of attack comprises an unsteady vortex lattice method, solving beam displacements and rotation, and determining convergence with one or more criteria, preferably wherein the unsteady vortex lattice method comprises:

> discretizing the cantilever surface into a lattice of vortex rings;
> imposing a no-penetration condition at collocation points;
> computing velocities;
> introducing vorticity to wakes;
> evaluating pressure at the collocation points; and integrating over the cantilever surface.

4. The method of claim 1, wherein determining the airspeed and the angle of attack further comprises solving potential flow based on an unsteady vortex lattice method.

5. The method of claim 1, wherein determining the airspeed and the angle of attack are based on a nonlinear displacement beam model.

6. The method of claim 1, further comprising: measuring deformation of the cantilever surface.

7. The method of claim 1, further comprising: iteratively determining whether convergence with one or more criteria has been achieved.

8. An airflow sensing system for measuring flight data, comprising:

> a cantilever (101) having a cantilever surface, the cantilever (101) being positioned on a surface of a vehicle (104);
> a transducer (102) connected to the cantilever (101) and configured to detected deflections of the cantilever (101) and produce an output based the deflections;
> a processing module (103) in communication with the cantilever (101);
> wherein the processing module (103) is calibrated to translate the output from the transducer (102) into one or more of an airspeed, an angle of attack, and a sideslip,
> **characterized in that**
> the transducer (102) is configured to detect two bending amplitudes and a torsional amplitude of deflections of the cantilever (101), the two bending amplitudes are detected along two axes perpendicular to each other.

9. The airflow sensing system of claim 8, wherein the cantilever (101) is configured to be supercritical beyond the Hopf bifurcation point for providing a stable response to a disturbance below a flutter boundary.

10. The airflow sensing system of claim 8, further comprising:

> at least one more cantilever;
> at least one more transducer configured to detected deflections of the at least one more cantilever and produce at least one more output to the processing module.

11. The airflow sensing system of claim 10, wherein the cantilever (101) and the at least one more cantilever comprise a cantilever array (105).

12. The airflow sensing system of claim 11, wherein the cantilever array (105) is a two-dimensional array with each of the two dimensions less than twenty centimeters.

13. The airflow sensing system of claim 8, wherein the processing module (103) is configured to determine the airspeed and the angle of attack based on calibration data generated from bending amplitudes and/or torsion amplitudes of the cantilever (101), wherein one or more of the bending amplitudes and the torsion amplitudes corresponds to a freestream velocity and/or the angle of attack.

14. The airflow sensing system of claim 8, wherein the processing module (103) is configured to iteratively determine whether convergence with one or more criteria has been achieved.

**15.** The airflow sensing system of claim 8, wherein the processing module (103) is configured to:

discretize the surface into a lattice of vortex rings;
impose a no-penetration condition at collocation points;
compute velocities;
introduce vorticity to wakes;
evaluate pressure at the collocation points; and
integrate over the surface.

**Patentansprüche**

**1.** Verfahren zum Erfassen eines Luftstroms, umfassend:

Messen von Strahlablenkungen eines Freischwingers (101);
Extrahieren von Daten über den Luftstrom anhand der gemessenen Strahlablenkungen des Freischwingers (101) und
Bestimmen eines oder mehrerer von einer Luftgeschwindigkeit, einem Anstellwinkel und einer Spur anhand der extrahierten Daten,
**dadurch gekennzeichnet, dass**:
die Strahlablenkungen des Freischwingers (101) mit einem Transducer (102) gemessen werden und das Messen von zwei Biegeamplituden des Freischwingers (101) entlang zwei senkrecht zueinander verlaufenden Achsen und einer Torsionsamplitude des Freischwingers (101) umfassen.

**2.** Verfahren nach Anspruch 1, ferner umfassend Erzeugen von Eichdaten aus Biege- oder Torsionsamplituden des Freischwingers (101), wobei mindestens eine von den Biege- und den Torsionsamplituden einer Freistrahlgeschwindigkeit und dem Anstellwinkel entspricht, wobei die Eichdaten beim Schritt des Bestimmens Verwendung finden.

**3.** Verfahren nach Anspruch 1, wobei der Freischwinger (101) eine Freischwingeroberfläche umfasst; wobei das Messen der Strahlablenkungen das Messen einer Verformung der Freischwingeroberfläche umfasst und wobei das Bestimmen von Luftgeschwindigkeit und Anstellwinkel umfasst: ein nichtlineares Wirbelgitterverfahren, Auflösen von Strahlversätzen und -rotation und Bestimmen einer Konvergenz mit mindestens einem Kriterium, vorzugsweise wobei das nichtlineare Wirbelgitterverfahren umfasst:

Diskretisieren der Freischwingeroberfläche zu einem Gitter aus Wirbelringen;
Auferlegen einer Bedingung des Nichteindringens an Kollokationspunkten;
Berechnen von Geschwindigkeiten;
Einfügen von Wirbligkeit in Nachströmungen;
Bewerten des Drucks an den Kollokationspunkten und
Integrieren über der Freischwingeroberfläche.

**4.** Verfahren nach Anspruch 1, wobei das Bestimmen von Luftgeschwindigkeit und Anstellwinkel ferner umfasst: Auflösen einer Potentialströmung mithilfe eines nichtlinearen Wirbelgitterverfahrens.

**5.** Verfahren nach Anspruch 1, wobei das Bestimmen von Luftgeschwindigkeit und Anstellwinkel aufgrund eines nichtlinearen Verschiebestrahlmodells erfolgt.

**6.** Verfahren nach Anspruch 1, ferner umfassend: Messen einer Verformung der Freischwingeroberfläche.

**7.** Verfahren nach Anspruch 1, ferner umfassend: iteratives Bestimmen, ob eine Konvergenz mit mindestens einem Kriterium erreicht worden ist.

**8.** Luftstromerfassungssystem zum Messen von Flugdaten, umfassend:

einen Freischwinger (101) mit einer Freischwingeroberfläche, wobei der Freischwinger (101) auf einer Oberfläche (104) eines Fahrzeugs positioniert ist;
einen mit dem Freischwinger (101) verbundenen Transducer (102), der zum Erkennen von Ablenkungen des Freischwingers (101) und zum Erzeugen eines Ausgangs anhand der Ablenkungen konfiguriert ist;

ein Verarbeitungsmodul (103), das mit dem Freischwinger (101) verbunden ist;
wobei das Verarbeitungsmoduls (103) zum Umwandeln des Ausgangs des Transducers (102) in mindestens eines von einer Luftgeschwindigkeit, einem Anstellwinkel und einer Spur kalibriert ist;
**dadurch gekennzeichnet, dass**
der Transducer (102) derart konfiguriert ist, dass er zwei Biegeamplituden und eine Torsionsamplitude von Ablenkungen des Freischwingers (101) erkennt und die zwei Biegeamplituden entlang zwei senkrecht zueinander verlaufenden Achsen erkannt werden.

9. System nach Anspruch 8, wobei der Freischwinger (101) derart konfiguriert ist, dass er jenseits des Hopf-Bifurkationspunktes überkritisch ist, um eine stabile Reaktion auf eine eine Flattergrenze unterschreitende Störung zu gewährleisten.

10. System nach Anspruch 8, ferner umfassend:

mindestens einen weiteren Freischwinger;
mindestens einen weiteren Transducer, der zum Erkennen von Ablenkungen des mindestens einen weiteren Freischwingers und zum Erzeugen mindestens eines weiteren Ausgangs an das Verarbeitungsmodul konfiguriert ist.

11. System nach Anspruch 10, wobei der Freischwinger (101) und der mindestens eine weitere Freischwinger eine Freischwingeranordnung (105) umfassen.

12. System nach Anspruch 11, wobei die Freischwingeranordnung (105) eine zweidimensionale Anordnung ist, wobei jede der beiden Abmessungen weniger als 20 mm beträgt.

13. System nach Anspruch 8, wobei das Verarbeitungsmodul (103) derart konfiguriert ist, dass es Luftgeschwindigkeit und Anstellwinkel anhand der aus Biege- und/oder Torsionsamplituden des Freischwingers (101) erzeugten Eichdaten bestimmt, wobei mindestens eine von den Biege- und Torsionsamplituden einer Freistrahlgeschwindigkeit und/oder dem Anstellwinkel entspricht.

14. System nach Anspruch 8, wobei das Verarbeitungsmodul (103) derart konfiguriert ist, dass es iterativ bestimmt, ob eine Konvergenz mit mindestens einem Kriterium erreicht worden ist.

15. System nach Anspruch 8, wobei das Verarbeitungsmodul (103) derart konfiguriert ist, dass es:

die Freischwingeroberfläche zu einem Gitter aus Wirbelringen diskretisiert;
eine Bedingung des Nichteindringens an Kollokationspunkten auferlegt;
Geschwindigkeiten berechnet;
Wirbligkeit in Nachströmungen einführt;
den Drucks an den Kollokationspunkten bewertet und
über der Freischwingeroberfläche integriert.

**Revendications**

1. Procédé de détection d'écoulement d'air, comprenant :

la mesure de déviations de faisceau d'un cantilever (101) ;
l'extraction d'informations relatives à l'écoulement de l'air à l'aide des déviations de faisceau mesurées du cantilever (101) ; et
la détermination d'un ou plusieurs paramètres parmi une vitesse anémométrique, un angle d'attaque et un glissement latéral, à partir des informations extraites,
**caractérisé en ce que**
les déviations de faisceau du cantilever (101) sont mesurées avec un transducteur (102) et comprennent la mesure de deux amplitudes de cintrage du cantilever (101) le long de deux axes qui sont perpendiculaires entre eux et d'une amplitude de torsion du cantilever (101).

2. Procédé selon la revendication 1, comprenant en outre la génération de données d'étalonnage à partir des amplitudes de cintrage ou des amplitudes de torsion du cantilever (101), dans lequel une ou plusieurs des amplitudes de cintrage et des amplitudes de torsion correspondent à une vitesse d'écoulement libre et à l'angle d'attaque, les données d'étalonnage étant utilisées lors de l'étape de détermination.

3. Procédé selon la revendication 1, dans lequel le cantilever (101) comprend une surface de cantilever ; dans lequel la mesure de déviations de faisceau comprend la mesure d'une déformation de la surface de cantilever ; et dans lequel la détermination de la vitesse anémométrique et de l'angle d'attaque comprend une méthode des tourbillons instationnaires, la résolution de déplacements et de rotation de faisceau, et la détermination d'une convergence avec un ou plusieurs critères, de préférence dans lequel la méthode des tourbillons instationnaires comprend :

la discrétisation de la surface de cantilever en un treillis d'anneaux tourbillonnaires ;
l'imposition d'une condition de non-pénétration aux points de collocation ;
le calcul de vitesses ;
l'introduction de la vorticité dans les sillages ;
l'évaluation de la pression aux points de collocation ; et
l'intégration sur la surface de cantilever.

4. Procédé selon la revendication 1, dans lequel la détermination de la vitesse anémométrique et de l'angle d'attaque comprend en outre la résolution d'un écoulement potentiel basée sur une méthode des tourbillons instationnaires.

5. Procédé selon la revendication 1, dans lequel la détermination de la vitesse anémométrique et de l'angle d'attaque est basée sur un modèle de faisceau à déplacement non linéaire.

6. Procédé selon la revendication 1, comprenant en outre : la mesure d'une déformation de la surface de cantilever.

7. Procédé selon la revendication 1, comprenant en outre : le fait de déterminer de manière itérative si une convergence avec un ou plusieurs critères a été obtenue ou non.

8. Système de détection d'écoulement d'air pour mesurer des paramètres de vol, comprenant :

un cantilever (101) doté d'une surface de cantilever, le cantilever (101) étant positionné sur une surface d'un véhicule (104) ;
un transducteur (102) relié au cantilever (101) et configuré pour détecter des déviations du cantilever (101) et produire une sortie sur la base des déviations ;
un module de traitement (103) en communication avec le cantilever (101) ;
dans lequel le module de traitement (103) est étalonné de manière à traduire la sortie du transducteur (102) en un ou plusieurs paramètres parmi une vitesse anémométrique, un angle d'attaque et un glissement latéral, **caractérisé en ce que**
le transducteur (102) est configuré pour détecter deux amplitudes de cintrage et une amplitude de torsion des déviations du cantilever (101), les deux amplitudes de cintrage étant détectées le long de deux axes perpendiculaires entre eux.

9. Système de détection d'écoulement d'air selon la revendication 8, dans lequel le cantilever (101) est configuré pour être supercritique au-delà du point de bifurcation de Hopf afin de fournir une réponse stable à une perturbation inférieure à une limite de flottement.

10. Système de détection d'écoulement d'air selon la revendication 8, comprenant en outre :

au moins un cantilever supplémentaire ;
au moins un transducteur supplémentaire configuré pour détecter des déviations de l'au moins un cantilever supplémentaire et transmettre au moins une sortie supplémentaire au module de traitement.

11. Système de détection d'écoulement d'air selon la revendication 10, dans lequel le cantilever (101) et l'au moins un cantilever supplémentaire comprennent un réseau de cantilevers (105).

12. Système de détection d'écoulement d'air selon la revendication 11, dans lequel le réseau de cantilevers (105) est un réseau bidimensionnel dont chacune des deux dimensions est inférieure à vingt centimètres.

**13.** Système de détection d'écoulement d'air selon la revendication 8, dans lequel le module de traitement (103) est configuré pour déterminer la vitesse anémométrique et l'angle d'attaque en se basant sur des données d'étalonnage générées à partir d'amplitudes de cintrage et/ou d'amplitudes de torsion du cantilever (101), une ou plusieurs des amplitudes de cintrage et des amplitudes de torsion correspondant à une vitesse d'écoulement libre et/ou à l'angle d'attaque.

**14.** Système de détection d'écoulement d'air selon la revendication 8, dans lequel le module de traitement (103) est configuré pour déterminer de manière itérative si une convergence avec un ou plusieurs critères a été obtenue ou non.

**15.** Système de détection d'écoulement d'air selon la revendication 8, dans lequel le module de traitement (103) est configuré pour :

discrétiser la surface en un treillis d'anneaux tourbillonnaires ;
imposer une condition de non-pénétration aux points de collocation ;
calculer des vitesses ;
introduire la vorticité dans les sillages ;
évaluer la pression aux points de collocation ; et
intégrer sur la surface.

104

101

102

103

105

Figure 1

Figure 2

101

Figure 3

Current simulations

Freno & Cizmas, *International Journal of Non-Linear Mechanics*, 2011

Figure 4

Figure 5

(a) Displacement along x-axis

(b) Displacement along y-axis

(c) Torsion φ

Figure 6

Figure 7

Figure 8

Figure 9

Tractor configuration – top view

X: perpendicular to the sheet, pointing away from the viewer
O: perpendicular to the sheet, pointing towards the viewer

Figure 10

airflow sensors

Pusher configuration – top view

X: perpendicular to the sheet, pointing away from the viewer
O: perpendicular to the sheet, pointing towards the viewer

Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61762102 A
- US 6526821 B
- WO 0039537 A
- WO 2008042412 A
- US 5117687 A
- US 2007119231 A
- DE 102010016837

### Non-patent literature cited in the description

- **ABOELKASSEM Y ; NAYFEH A ; GHOMMEM M.** Bio-mass Sensor Using an Electrostatically Actuated Microcantilever in a Vaccum MicroChannel. *Microsystem Technologies,* 2010, vol. 16, 1749-1755
- **ACAR C ; SHKEL AM.** Structural design and experimental characterization of torsional micromachined gyroscopes with non-resonant drive mode. *Journal of Micromechanics and Microengineering,* 2004, vol. 14 (15), 15-25
- **BHADBHADE V ; JALILI N ; MAHMOODI SN.** A novel piezoelectrically actuated flexural/torsional vibrating beam gyroscope. *Journal of Sound and Vibration,* 2008, vol. 311, 1305-1324
- **CHANGIZI MA ; ROMAN DE ; STIHARU I.** Detection of bio-chemical reactions through micro structural interactions. *Journal of Optoelectronics and Advanced Materials,* 2011, vol. 13, 1010-1015
- *DSPM Industria, www.dspmindustria.it/tool/download .php?id=3612 &idst=1393*
- **ESMAEILI M ; JALILI N ; DURALI M.** Dynamic modeling and performance evaluation of a vibrating beam microgyroscope under general support motion. *Journal of Sound and Vibration,* 2006, vol. 301 (1-2), 146-164
- **FEI H ; ZHU R ; ZHOU Z ; WANG J.** Aircraft flight parameter detection based on a neural network using multiple hot-film flow speed sensors. *Smart Materials and Structures,* 2007, vol. 16, 1239
- **FRENO BA ; CIZMAS PGA.** A computationally efficient non-linear beam model. *International Journal of Non-Linear Mechanics,* 2011, vol. 46, 854-869
- **GHOMMEM M ; NAYFEH AH ; CHOURA S ; NAJAR F ; ABDEL-RAHMAN EM.** Modeling and performance study of a beam microgyroscope. *Journal of Sound and Vibration,* 2010, vol. 329 (23), 4970-4979
- **GHOMMEM M ; HAJJ MR ; NAYFEH AH.** Uncertainty Analysis near Bifurcation of an Aeroelastic System. *Journal of Sound and Vibration,* 2010, vol. 329 (23), 3335-3347
- **GHOMMEM M ; NAYFEH AH ; CHOURA S.** Model Reduction and Analysis of a Vibrating Beam Microgyroscope. *Journal of Vibration and Control,* 2012
- **GHOMMEM M ; HAJJ MR ; MOOK DT ; STANFORD BK ; BERAN PS ; WATSON LD.** Global optimization of actively-morphing flapping wings. *Journal of Fluids and Structures,* 2012, vol. 30, 210-228
- **GHOMMEM M ; ABDELKEFI A ; NUHAIT AO ; HAJJ MR.** Aeroelastic analysis and nonlinear dynamics of an elastically mounted wing. *Journal of Sound and Vibrations,* 2012, vol. 331, 5774-5787
- On Shape Optimization of Flapping Wings and their Performance Analysis. **GHOMMEM M ; COLLIER N ; NIEMI A ; CALO VM.** Computers and Fluids. Cornell University Library, 2013
- **HALL BD ; PREIDIKMAN S ; MOOK DT ; NAYFEH AH.** Novel Strategy for Suppressing the Flutter Oscillations of Aircraft Wings. *AIAA Journal,* 2001, vol. 39 (10), 1843-1850
- **HSU JC ; LEE HL ; CHANG WJ.** Flexural vibration frequency of atomic force microscope cantilevers using the Timoshenko beam model. *Nanotechnology,* 2007, vol. 18, 285503
- **KIM S ; NAM T ; PARK S.** Measurement of flow direction and velocity using a micromachined flow sensor. *Sensors and Actuators Physics A,* 2004, vol. 114, 312318
- **LEE CY ; WEN CY ; HOU HH ; YANG RJ ; TSAI CH ; FU LM.** Design and characterization of MEMS-based flow-rate and flow-direction microsensor. *Micro fluidics and Nano fluidics,* 2009, vol. 36, 363-371

- **LIU H ; ZHANG S ; KATHIRESAN R ; KOBAYASHI T ; LEE C.** Development of piezoelectric microcantilever flow sensor with wind-driven energy harvesting capability. *Applied Physics Letters,* 2012, vol. 100, 223905
- **MA RH ; CHOU PC ; WANG YH ; HSUEH TH ; FU LM ; LEE CY.** A microcantilever-based gas flow sensor for flow rate and direction detection. *Microsystem Technologies,* 2009, vol. 15, 1201-1205
- **MA RH ; HO MC ; LEE CY ; WANG YH ; FU LM.** Micromachined silicon cantilever paddle for high-flow-rate sensing. *Sensors and Materials,* 2006, vol. 18 (8), 405417
- **MA RH ; LEE CY ; WANG YH ; CHEN HJ.** Microcantilever-based weather station for temperature, humidity and flow rate measurement. *Microsystem Technologies,* 2008, vol. 14, 971977
- **MAENAKA K ; KONISHI Y ; MAEDA M.** Analysis of a highly sensitive silicon gyroscope with cantilever beam as vibrating mass. *Sensors and Actuators,* 1996, vol. 54 (3), 568-573
- **MOHITE S ; PATIL N ; PRATAP R.** Design, modeling and simulation of vibratory micromachined gyroscopes. *Journal of Physics,* 2006
- **NAYFEH AH ; GHOMMEM M ; HAJJ MR.** Normal Form Representation of The Aerodynamic Response of The Goland Wing. *Nonlinear Dynamics,* 2011, vol. 67 (3), 1847-1861
- **NAYFEH AH ; ABDEL-RAHMAN EM ; GHOMMEM M.** A Novel Frequency-Domain Microgyroscope. *Journal of Vibration and Control. Under review,* 2013
- **PREIDIKMAN S ; MOOK DT.** Time-Domain Simulations of Linear and Non-Linear Aeroelastic Behavior. *Journal of Vibration and Control,* 2000, vol. 6 (8), 1135-1176
- **STANFORD BK ; BERAN PS.** Optimal thickness distributions of aeroelastic flapping shells. *Aerospace Science and Technology,* 2011
- **QUE R ; ZHU R.** Aircraft Aerodynamic Parameter Detection Using Micro Hot-Film Flow Sensor Array and BP Neural Network Identification. *Sensors,* 2012, vol. 12, 10920
- **YEH YL ; WANG CC ; JANG MJ ; LIN YP ; CHEN KS.** Nonlinear dynamic response of cantilever beam tip during atomic force microscopy (AFM) nanolithography of copper surface. *Journal of Physics,* 2008, vol. 96, 012199
- **WANG Z.** Time-domain simulations of aerodynamic forces on three-dimensional configurations, unstable aeroelastic responses, and control by neural network systems. *PhD Dissertation, Virginia Tech, Blacksburg,* 2004